(19) Europäisches Patentamt
European Patent Office
Office européen des brevets

(11) **EP 3 488 505 B1**

(12) **FASCICULE DE BREVET EUROPEEN**

(45) Date de publication et mention de la délivrance du brevet:
**24.06.2020 Bulletin 2020/26**

(21) Numéro de dépôt: **17748553.9**

(22) Date de dépôt: **19.07.2017**

(51) Int Cl.:
*H01S 3/00* (2006.01)  *G01N 21/63* (2006.01)

(86) Numéro de dépôt international:
**PCT/FR2017/051973**

(87) Numéro de publication internationale:
**WO 2018/015663 (25.01.2018 Gazette 2018/04)**

(54) **SYSTÈME ET PROCÉDÉ DE SPECTROMÉTRIE ACOUSTIQUE RÉSONANTE**

VERFAHREN UND SYSTEM ZUR AKUSTISCHEN RESONANZSPEKTROSKOPIE

ACOUSTIC RESONANCE SPECTROSCOPY METHOD AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2016 FR 1656926**

(43) Date de publication de la demande:
**29.05.2019 Bulletin 2019/22**

(73) Titulaires:
- **Université de Bordeaux**
  **33000 Bordeaux (FR)**
- **Institut Polytechnique de Bordeaux**
  **33400 Talence (FR)**
- **Centre National de la Recherche Scientifique**
  **75016 Paris (FR)**
- **Ecole Nationale Supérieure d'Arts et Métiers**
  **75013 Paris (FR)**
- **Commissariat à l'énergie atomique**
  **et aux énergies alternatives**
  **75015 Paris (FR)**
- **Institut d'Optique Graduate School**
  **91127 Palaiseau (FR)**

(72) Inventeurs:
- **AUDOIN, Bertrand**
  **33600 Pessac (FR)**
- **CORMIER, Eric**
  **33610 Cestas (FR)**
- **LHERMITE, Jérôme**
  **64600 Anglet (FR)**
- **SANTARELLI, Giorgio**
  **33400 Talence (FR)**
- **GUILLET, Yannick**
  **33770 Salles (FR)**
- **AUBOURG, Adrien**
  **33270 Floirac (FR)**

(74) Mandataire: **Priori, Enrico**
**Marks & Clerk France**
**Immeuble "Visium"**
**22, avenue Aristide Briand**
**94117 Arcueil Cedex (FR)**

(56) Documents cités:
- **FERNANDO PÉREZ-COTA ET AL: "Thin-film optoacoustic transducers for subcellular Brillouin oscillation imaging of individual biological cells", APPLIED OPTICS, vol. 54, no. 28, 28 septembre 2015 (2015-09-28), page 8388, XP055362715, WASHINGTON, DC; US ISSN: 0003-6935, DOI: 10.1364/AO.54.008388**
- **SMITH RICHARD J ET AL: "Optically excited nanoscale ultrasonic transducers", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 137, no. 1, 1 janvier 1901 (1901-01-01), pages 219-227, XP012193881, ISSN: 0001-4966, DOI: 10.1121/1.4904487 [extrait le 1901-01-01]**
- **MAZNEV A A ET AL: "Coherent Brillouin spectroscopy in a strongly scattering liquid by picosecond ultrasonics", OPTICS LETTERS, OPTICAL SOCIETY OF AMERICA, vol. 36, no. 15, 1 août 2011 (2011-08-01), pages 2925-2927, XP001569589, ISSN: 0146-9592, DOI: 10.1364/OL.36.002925 [extrait le 2011-08-01]**

EP 3 488 505 B1

- **Quantum Laser: "Ultrafast optical sampling oscilloscope", , 3 mai 2016 (2016-05-03), XP055362452, Extrait de l'Internet: URL:http://www.laserquantum.com/blog/ultra fast-optical-sampling-oscilloscope/#sthash .0U DVFw3h.dpbs [extrait le 2017-04-06]**

**Description**

DOMAINE TECHNIQUE AUQUEL SE RAPPORTE L'INVENTION

La présente invention concerne de manière générale le domaine des appareils de mesure de propriétés mécaniques d'un échantillon à l'échelle microscopique ou nanoscopique.

Elle concerne plus particulièrement un système et un procédé de mesure de diffusion Brillouin pour l'analyse non-destructive d'un échantillon. Plus précisément, elle concerne une mesure de type opto-acoustique induite et détectée par faisceau lumineux.

ARRIERE-PLAN TECHNOLOGIQUE

Il existe différentes techniques de mesure des propriétés mécaniques d'élasticité de matériaux en couches minces.

Les mesures d'élasticité de couches minces sont couramment réalisées par indentation. L'indentation consiste à appliquer une charge déterminée en surface d'un matériau puis à mesurer l'empreinte induite par la déformation du matériau. L'indentation est, par nature, destructive. De plus, l'indentation met en jeu simultanément les propriétés élastiques de compression et cisaillement, ainsi que la plasticité de la matière. L'analyse quantitative de l'indentation est donc complexe. Enfin, l'indentation ne permet pas de quantifier l'adhésion d'un matériau.

La technique de diffusion Brillouin spontanée est basée sur la diffusion inélastique d'un faisceau lumineux continu incident par des phonons incohérents d'origine thermique présents naturellement au sein du milieu à analyser. Le signal optique diffusé contient l'information sur la célérité des phonons ce qui donne accès à l'élasticité du milieu et en particulier à l'élasticité anisotrope. La technique de diffusion Brillouin spontanée a été appliquée dans de très nombreux domaines. Cependant, le niveau très faible du signal de diffusion Brillouin nécessite en général un volume d'interaction important. Pour dépasser cette limite, la publication de A. A. Stashkevich, P. Djemia, Y. K. Fetisov, N. Bizière and C. Fermon, "High-Intensity Brillouin light scattering by spin waves in a permalloy film under microwave resonance pumping", J. Appl. Phys. 102, 103905, 2007, propose une amplification du signal à partir d'une source extérieure micro-onde. Par ailleurs, l'utilisation de spectromètres à réseau de phase a permis d'augmenter la sensibilité de la détection des photons de diffusion Brillouin. La publication de G. Scarcelli et S. H. Yun, « Confocal Brillouin microscopy for three-dimensional mechanical imaging », Nat. Photonics 2, 39-43, 2008, illustre des expériences de microscopie Brillouin confocale pour l'imagerie de milieux notamment biologiques. Cependant, la très faible amplitude des phonons thermiques incohérents oblige, d'une part, à dégrader la résolution spatiale des images et nécessite, d'autre part, une acquisition point par point, ce qui rend impossible l'acquisition d'image en temps réel.

La technique de mesure basée sur la diffusion Brillouin spontanée est très peu exploitée en dehors des laboratoires. Cette technique est incompatible avec l'imagerie plein champ et ne permet pas d'en déduire des mesures d'adhésion entre matériaux.

En microélectronique, la métrologie des propriétés d'élasticité des couches minces est réalisée par une technique d'acoustique picoseconde. L'acoustique picoseconde est une technique pompe-sonde résolue en temps qui utilise un faisceau lumineux de pompe comprenant une ou plusieurs impulsions laser pour la génération de phonons acoustiques cohérents et un faisceau lumineux de sonde décalé temporellement avec un délai ajustable par rapport au faisceau pompe pour la détection de la diffusion Brillouin sur les phonons cohérents dans une gamme spectrale allant du GHz au THz. Les impulsions laser de pompe sont des impulsions laser ultra-brèves. Dans le présent document, on entend par impulsion ultra-brève une impulsion dont la durée est comprise entre une dizaine de femtoseconde et une centaine de picoseconde. Le faisceau lumineux de pompe et le faisceau lumineux de sonde peuvent provenir d'une même source ou de deux sources distinctes. Les faisceaux lumineux de pompe et de sonde peuvent avoir la même longueur d'onde ou des longueurs d'onde différentes.

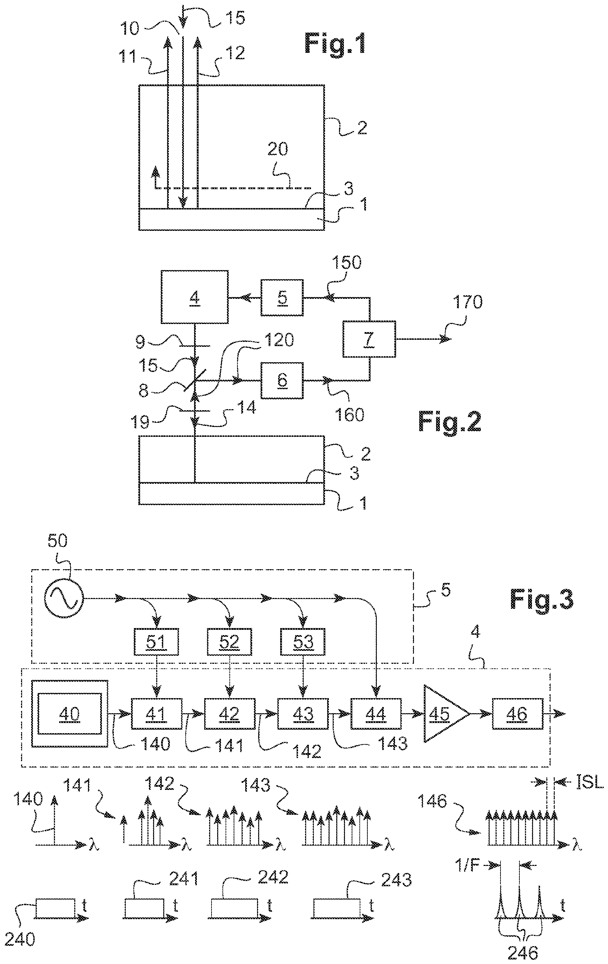

La figure 1 représente schématiquement un dispositif et procédé d'acoustique picoseconde selon l'art antérieur. Un échantillon 2 à analyser présente une interface 3 avec un transducteur opto-acoustique 1. A titre d'exemple, le transducteur opto-acoustique 1 est métallique ou comporte un revêtement métallique en couche mince. L'échantillon peut être déposé ou fixé, par exemple par collage, sur le transducteur opto-acoustique 1. On considère un faisceau lumineux de pompe 10, ou faisceau pompe, constitué d'une seule impulsion laser de durée sub-picoseconde. Le faisceau lumineux de pompe 10 mono-impulsion est incident sur l'échantillon 2 à analyser et transmis en direction de l'interface 3. L'absorption partielle de l'impulsion laser de pompe par le matériau transducteur 1 génère, par conversion opto-acoustique, un front acoustique 20 qui se propage dans l'échantillon 2 en sens opposé de l'impulsion laser incidente. Ce front acoustique 20 engendre un champ de déformation transitoire qui induit des perturbations de l'indice de réfraction de l'échantillon. Un faisceau lumineux de sonde 15, ou faisceau sonde, est dirigé vers l'échantillon. Dans l'exemple de la figure 1, le faisceau pompe et le faisceau sonde sont en incidence normale sur l'échantillon. Le faisceau sonde 15 est décalé temporellement par rapport au faisceau pompe 10. Une portion 11 du faisceau sonde qui n'est pas absorbée est réfléchie à l'interface 3 entre le transducteur opto-acoustique 1 et l'échantillon 2. Une autre portion 12 du faisceau sonde est rétro-diffusée du fait de l'interaction Brillouin sur le front d'onde acoustique 20. Le faisceau réfléchi et le faisceau rétro-diffusé interfèrent et créent des modulations ou des oscillations temporelles. La fréquence de ces interférences est liée à la célérité des phonons cohérents dans l'échantillon. On collecte le faisceau réfléchi et le faisceau rétro-diffusé. La détection de la trace temporelle du changement relatif de réflectivité du faisceau sonde permet de mesurer les perturbations de l'indice de réfraction de l'échantillon. Pour un échantillon constitué d'un milieu de propagation suffisamment transparent au faisceau pompe et au faisceau sonde, la technique d'acoustique picoseconde permet de détecter dans le domaine temporel des oscillations Brillouin qui donnent accès à la célérité des ondes acoustiques. Un avantage de cette technique découle du fait que l'amplitude du signal de diffusion Brillouin généré par la technique conventionnelle d'acoustique picoseconde, c'est-à-dire par des phonons cohérents, est plus importante que lorsque cette diffusion est initiée par des phonons thermiques.

Cependant, dans une expérience d'acoustique picoseconde conventionnelle, l'excitation impulsionnelle génère un spectre de phonons cohérents large bande s'étendant jusqu'au térahertz (THz). Seule la composante spectrale du signal acoustique transitoire en accord avec la fréquence Brillouin contribue alors à l'interaction photo-élastique. La détection des phonons cohérents par acoustique picoseconde requiert donc l'utilisation d'un système de détection synchrone. Or, à notre connaissance, il n'existe pas de système imageur basé par exemple sur une caméra CCD, ayant une détection synchrone sur chaque pixel de la caméra, si bien qu'une détection plein-champ sur caméra CCD n'est pas possible en acoustique picoseconde.

Les développements de la technique d'acoustique picoseconde ont été initiés par des recherches en physique du solide et les principales applications industrielles se trouvent dans le domaine de la microélectronique. Des premières applications de la technique d'acoustique picoseconde à la biologie ont permis d'accéder aux propriétés mécaniques d'une cellule biologique à une échelle subcellulaire représentées sous forme d'image.

La technique d'acoustique picoseconde est aussi applicable à des couches minces non transparentes. Elle peut donner accès à des mesures d'épaisseur. Le très faible rapport signal à bruit rend nécessaire l'utilisation d'une détection synchrone. Cependant les temps d'acquisition sont longs, difficilement compatibles avec l'imagerie.

Lors de mesures de raies Brillouin par la technique d'acoustique picoseconde classique, la résolution spectrale est limitée par la fréquence de répétition des lasers impulsionnels, généralement de l'ordre de 80 MHz ou 50 MHz.

Le document H. J. Maris « Picosecond ultrasonics » Sci. Am. 278, 64-67, 1998, décrit un dispositif de mesure basé sur l'émission d'une impulsion laser picoseconde incidente sur un échantillon multi-couches à analyser. Une première impulsion laser picoseconde, dite impulsion pompe, chauffe l'échantillon et induit une impulsion acoustique se propageant dans l'échantillon multi-couches. Cette impulsion acoustique se transmet à travers les différentes couches vers la surface de l'échantillon et modifie les propriétés optiques de la surface. Une deuxième impulsion laser picoseconde, dite impulsion sonde, est dirigée sur l'échantillon. En comparant la forme temporelle de l'onde optique réfléchie sur la surface par rapport à celle de l'impulsion sonde émise, on peut déterminer l'instant auquel l'écho de l'onde acoustique atteint un pic, avec une résolution sub-picoseconde. La technique d'ultrasons picosecondes permet ainsi de mesurer de manière non-destructive les épaisseurs et les interfaces d'un échantillon multi-couches avec une précision inférieure à un Angstrom.

FERNANDO PÉREZ-COTA ET AL: "Thin-film optoacoustic transducers for subcellular Brillouin oscillation imaging of individual biological cells", APPLIED OPTICS, vol. 54, no. 28, 28 septembre 2015 (2015-09-28), page 8388, ,WASHINGTON, DC; dècrit un système de spectrométrie acoustique résonante pour l'analyse d'un échantillon.

La publication H. N. Lin, R. J. Stoner, H. J. Maris et J. Tauc, "Phonon attenuation and velocity measurement in transparent materials by picosecond acoustic interferometry, J. Appl. Phys., 69, 3816, 1991", décrit une autre technique d'interférométrie acoustique picoseconde, dans laquelle une impulsion picoseconde de pompe est transmise à travers un échantillon à analyser puis absorbée sur une interface avec un film métallique. Cette absorption génère des phonons acoustiques cohérents qui se propagent dans l'échantillon et induisent une modification locale de l'indice optique. Une impulsion picoseconde de sonde, décalée temporellement par rapport à l'impulsion de pompe, est dirigée sur l'échantillon. L'impulsion de sonde créée des diffusions et réflexions multiples entre les phonons et l'interface avec le film métallique. La mesure des variations de réflectivité optique sur l'échantillon en fonction du temps fait apparaitre des oscillations dues aux interférences entre les diffusions et réflexions multiples. L'analyse de ces mesures d'interférométrie acoustique picoseconde en fonction du temps permet d'en déduire la célérité des phonons.

La publication G. Scarcelli and S. H. Yun, « Confocal Brillouin microscopy for three-dimensional mechanical imaging », Nat. Photonics 2, 39-43, 2008, décrit un appareil de microscopie confocal basé sur une source laser continue et un spectromètre de diffusion Brillouin pour former des images de microscopie optique en deux ou trois dimensions (2D ou 3D) révélant les propriétés mécaniques d'une cellule biologique en solution. Toutefois, l'intensité des spectres de diffusion Brillouin est généralement très faible.

La publication A. A. Stashkevich, P. Djemia, Y. K. Fetisov, N. Bizière et C. Fermon," High-Intensity Brillouin light scattering by spin waves in a permalloy film under microwave resonance pumping", J. Appl. Phys.

102, 103905, 2007, décrit un dispositif de mesure de diffusion Brillouin assisté par une excitation micro-onde. Ce couplage d'une source d'excitation lumineuse et d'une excitation micro-onde permet selon les auteurs d'augmenter la mesure de diffusion Brillouin de trois ordres de grandeur lorsqu'il y a une résonance avec des ondes de spin.

La publication T. Dehoux, M. Abi Ghanem, O. F. Zouani, J.-M. Rampnoux, Y. Guillet S. Dilhaire, M.-C. Durrieu et B. Audoin, « All-optical broadband ultrasonography of single cells », Scientific Reports, 5 :8650, DOI 10.1038, 2015, décrit un microscope inversé à impulsions opto-acoustiques comprenant un premier et un second laser à impulsions picosecondes, un détecteur photodiode et un transducteur opto-acoustique constitué d'un substrat de saphir ayant une interface avec un film de titane. Le premier laser émet des impulsions laser de pompe à une première longueur d'onde et une première fréquence de répétition vers le substrat de saphir du transducteur opto-acoustique, l'autre interface du film de titane étant en contact avec une mono-cellule à analyser. Chaque impulsion laser de pompe est absorbée dans le film de titane et génère une impulsion acoustique, qui se réfléchit sur l'interface titane-cellule. Le second laser émet des impulsions sonde à une autre longueur d'onde et une autre fréquence de répétition. Les impulsions sonde sont focalisées sur l'interface titane-saphir, permettant ainsi de détecter les propriétés mécaniques de la cellule observée. La photodiode acquiert, en fonction du temps, les variations de réflectivité optique par couplage élasto-optique sur l'interface titane-saphir. Ce microscope inversé à impulsions opto-acoustiques permet d'étudier l'adhérence d'une cellule unique à un film de titane. Dans ce système, aucune impulsion laser n'atteint l'interface titane-cellule. L'inconvénient de ce système est que l'acquisition, se faisant point par point, est longue.

Il est souhaitable de disposer d'une analyse rapide des propriétés acoustiques des matériaux inhomogènes, des couches minces ou des cellules biologiques qui soit résolue en deux dimensions, et éventuellement résolue en 3D, sur des distances de plusieurs centaines de nanomètres à plusieurs microns, tout en ayant une sensibilité accrue.

OBJET DE L'INVENTION

Afin de remédier aux inconvénients précités de l'état de la technique, la présente invention propose un système de mesure de diffusion Brillouin par spectrométrie acoustique résonante pour l'analyse des propriétés mécaniques d'un échantillon.

Plus particulièrement, on propose selon l'invention un système de spectrométrie acoustique résonante comprenant :

- un moyen de transduction opto-acoustique ayant une interface en contact avec un échantillon à analyser,

- un dispositif optique de pompe-sonde adapté pour générer un faisceau pompe et un faisceau sonde, le faisceau pompe étant constitué d'une série d'impulsions lumineuses de pompe ultrabrèves ayant une fréquence de répétition située dans un domaine spectral compris entre plusieurs centaines de mégahertz et plusieurs dizaines de gigahertz, et une longueur d'onde de pompe adaptée à la transparence du matériau de l'échantillon, et

- des moyens opto-mécaniques pour diriger le faisceau pompe vers le moyen de transduction opto-acoustique et pour générer, par conversion opto-acoustique, un réseau spatial périodique de phonons acoustiques cohérents dans l'échantillon, le réseau spatial périodique de phonons ayant un pas déterminé en fonction d'un rapport entre la fréquence de répétition du faisceau pompe et une célérité acoustique des phonons dans l'échantillon, le faisceau sonde ayant une longueur d'onde de sonde adaptée à la transparence du matériau de l'échantillon, et

- d'autres moyens opto-mécaniques pour diriger le faisceau sonde vers l'échantillon de manière à former un faisceau de diffusion du faisceau sonde sur le réseau périodique de phonons,

- un dispositif de variation de fréquence adapté pour faire varier la fréquence de répétition F du faisceau pompe dans une gamme spectrale, de manière à faire varier le pas P du réseau périodique de phonons dans l'échantillon, et

- un système de photo-détection configuré pour recevoir le faisceau de diffusion et mesurer un signal de diffusion en fonction de la fréquence de répétition.

Avantageusement, la fréquence de répétition du faisceau pompe est comprise dans une gamme s'étendant entre quelques centaines de mégahertz et quelques dizaines de gigahertz, par exemple entre 0,5 GHz et 50Ghz, et de préférence entre 4 GHz et 20 GHz.

De façon avantageuse, un système de traitement du signal est configuré pour traiter le signal de diffusion détecté en fonction de la fréquence de répétition F variable et pour en extraire une fréquence de résonance $f_B$ correspondant à une diffusion Brillouin amplifiée par résonance sur le réseau de phonons.

Ce système de spectrométrie acoustique permet ainsi une mesure de diffusion Brillouin résonante lorsque le pas (P) du réseau périodique de phonons est égal à un multiple entier de la demi-longueur d'onde du faisceau sonde, pour un faisceau sonde en incidence normale.

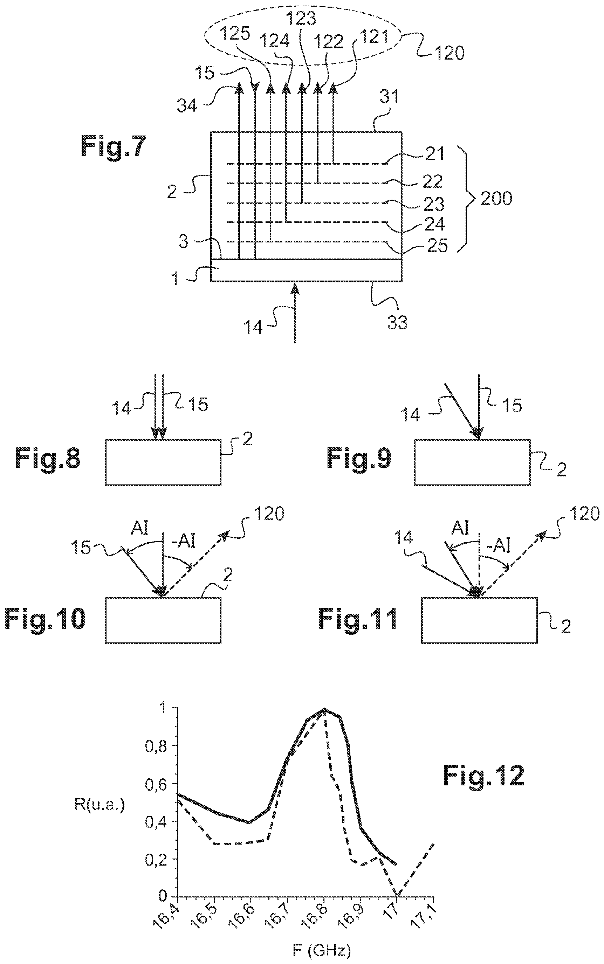

Sans être lié par une théorie, lorsque la fréquence de répétition des impulsions pompe atteint la résonance de Brillouin, le faisceau sonde est réfléchi plus efficacement sur l'échantillon, ce qui correspond aux conditions de Bragg pour le faisceau sonde. Le système de mesure de diffusion Brillouin résonante est basé sur l'interaction Brillouin entre un échantillon et un train d'impulsions laser picosecondes de pompe ayant une fréquence de répétition élevée, dans le domaine du gigahertz, c'est-à-dire dans le domaine des fréquences de diffusion Brillouin pour la plupart des matériaux. De plus, cette fréquence de répétition est accordable par exemple dans une gamme spectrale elle aussi située dans le domaine du gigahertz. Par exemple, les variations de la fréquence de répétition s'étendent sur une gamme spectrale comprise entre 5 et 20 GHz. Dans une application donnée, le balayage de la fréquence de répétition peut être limité à une gamme spectrale plus retreinte, par exemple à proximité d'une fréquence de diffusion Brillouin pré-évaluée, par exemple dans l'exemple illustré en figure 12 entre 16,4 GHz et 17,1 GHz.

L'interaction entre le faisceau pompe et l'échantillon permet la génération d'un réseau périodique de phonons acoustiques cohérents entretenus à la fréquence de répétition du faisceau pompe. La fréquence de résonance Brillouin du matériau peut être détectée directement dans un signal formé par diffusion du faisceau sonde sur le réseau de phonons, ce signal étant mesuré en fonction d'un balayage de la fréquence de répétition du faisceau pompe.

Le signal détecté résultant de la diffusion sur le réseau périodique de phonons est ainsi amplifié par résonance à la fréquence Brillouin. L'amplitude élevée de ce signal de diffusion Brillouin résonante rend possible la formation d'image d'échantillon au moyen d'un système optique d'imagerie plein champ en temps réel.

D'autres caractéristiques non limitatives et avantageuses du système de spectrométrie acoustique résonante résolu en fréquence, conforme à l'invention, prises individuellement ou selon toutes les combinaisons techniquement possibles, sont les suivantes :

- le dispositif optique de pompe-sonde comprend un laser configuré pour émettre un faisceau laser continu monochromatique, un générateur micro-onde de fréquence variable configuré pour générer un signal de commande à ladite fréquence de répétition et une pluralité de modulateurs électro-optiques configurés pour recevoir le signal de commande et moduler le faisceau laser continu monochromatique en amplitude et en phase à ladite fréquence de répétition et un compresseur configuré pour recevoir le faisceau laser modulé en amplitude et en phase à ladite fréquence de répétition pour générer le faisceau pompe, ce faisceau pompe ayant une distribution spectrale en peigne optique comprenant une pluralité de longueurs d'onde discrètes séparées par un intervalle spectral libre déterminé par la fréquence de répétition ;
- le faisceau sonde est continu temporellement ;
- le faisceau sonde est constitué d'une autre série d'impulsions lumineuses de sonde ultrabrèves ;
- le faisceau pompe ayant une longueur d'onde de pompe, la longueur d'onde de sonde est différente de la longueur d'onde de pompe, ou selon une alternative, la longueur d'onde de sonde est égale à la longueur d'onde de pompe.

Dans un mode de réalisation particulier, on utilise une seule source laser pour générer le faisceau pompe et le faisceau sonde, le faisceau sonde étant constitué d'une portion du faisceau pompe.

Selon d'autres aspects particuliers et avantageux du système de spectrométrie acoustique résonante :

- les moyens opto-mécaniques sont configurés de manière à ce que le faisceau pompe et le faisceau sonde soient en incidence normale sur l'échantillon ; selon une alternative le faisceau pompe est en incidence normale sur l'échantillon et le faisceau sonde en incidence oblique sur l'échantillon, ou, selon une autre alternative le faisceau pompe est en incidence oblique sur l'échantillon et le faisceau sonde en incidence normale sur l'échantillon, ou, selon encore une autre alternative, le faisceau pompe est en incidence oblique sur l'échantillon et le faisceau sonde est en une autre incidence oblique sur l'échantillon ;

- le dispositif de variation de fréquence est adapté pour faire varier la fréquence de répétition du faisceau pompe dans la gamme spectrale comprise entre 0,5 GHz et 20 GHz et de préférence entre 5 GHz et 20 GHz, continument, ou avec un pas de quelques hertz ou quelques kHz ;
- le faisceau sonde est configuré pour éclairer une zone de l'échantillon et le système de photo-détection comporte un détecteur d'image résolu en deux dimensions et un système optique de formation d'image configuré pour former une image de ladite zone de l'échantillon sur le détecteur d'image, le dispositif de photo-détection ayant de préférence une résolution spatiale micrométrique ou sub- micrométrique sur l'échantillon.

De façon avantageuse, le système de mesure de diffusion Brillouin résonante par spectrométrie acoustique résolue en fréquence comporte un système de traitement du signal adapté pour analyser le signal de diffusion acoustique en fonction de la fréquence de répétition et en déduire une fréquence de diffusion Brillouin résonante lorsque la fréquence de répétition du faisceau pompe est telle que le pas du réseau périodique de phonons est égal à un multiple entier d'une demi-longueur d'onde du faisceau sonde. Avantageusement, le système de traitement du signal est adapté pour calculer au moins une valeur de propriété mécanique de l'échantillon analysé en fonction de la fréquence de diffusion Brillouin résonante.

L'invention propose également un procédé de spectrométrie acoustique résonante, le procédé comprenant les étapes suivantes:

- génération d'un faisceau pompe constitué d'une série d'impulsions lumineuses de pompe ultrabrèves ayant une fréquence de répétition située dans un domaine spectral compris entre plusieurs centaines de mégahertz et plusieurs dizaines de gigahertz ;
- le faisceau pompe étant incident, de préférence par transmission à travers un échantillon à analyser, sur un moyen de transduction opto-acoustique ayant une interface avec un échantillon à analyser, de manière à générer un réseau périodique de phonons acoustiques cohérents dans l'échantillon, le réseau périodique de phonons ayant un pas déterminé en fonction d'un rapport entre la fréquence de répétition du faisceau pompe et une célérité acoustique des phonons acoustiques cohérents dans l'échantillon ;

- génération d'un faisceau sonde ayant une longueur d'onde de sonde, le faisceau sonde étant dirigé vers l'échantillon de manière à former un faisceau diffusé par diffusion du faisceau sonde sur le réseau périodique de phonons acoustiques cohérents ;
- variation de la fréquence de répétition du faisceau pompe dans une gamme spectrale de manière à faire varier le pas du réseau périodique de phonons acoustiques cohérents dans l'échantillon ;
- photo-détection du faisceau diffusé en fonction de la fréquence de répétition variable dans ladite gamme spectrale, et
- mesure d'un signal de diffusion en fonction de la fréquence de répétition dans ladite gamme spectrale.

Avantageusement, un traitement du signal de diffusion en fonction de la fréquence de répétition permet d'en déduire une mesure de diffusion Brillouin résonante lorsque la fréquence de répétition est telle que le pas du réseau périodique de phonons est égal à un multiple entier d'une demi-longueur d'onde du faisceau sonde.

Ce système et procédé de mesure de diffusion Brillouin résonante par spectrométrie acoustique résolue en fréquence trouve des applications notamment dans la caractérisation de matériaux et en bio-photonique.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement le principe d'une mesure acoustique picoseconde selon l'art antérieur ;
- la figure 2 représente schématiquement un système de spectrométrie acoustique résonante selon un premier mode de réalisation de l'invention ;
- la figure 3 illustre schématiquement la structure et le fonctionnement d'une source d'impulsions du type peigne optique ;
- la figure 4 illustre une configuration pour la mesure de diffusion Brillouin résonante selon un premier mode de réalisation de l'invention ;
- la figure 5 illustre une configuration pour la mesure de diffusion Brillouin résonante selon un deuxième mode de réalisation de l'invention ;
- la figure 6 illustre une configuration pour la mesure de diffusion Brillouin résonante selon un troisième mode de réalisation de l'invention ;
- la figure 7 illustre une configuration pour la mesure de diffusion Brillouin résonante selon un quatrième mode de réalisation de l'invention ;
- la figure 8 représente schématiquement une configuration de faisceau pompe et faisceau sonde en incidence normale sur l'échantillon ;
- la figure 9 représente schématiquement une configuration de faisceau pompe en incidence oblique et faisceau sonde en incidence normale ;
- la figure 10 représente schématiquement une configuration de faisceau pompe en incidence normale et faisceau sonde en incidence oblique;
- la figure 11 représente schématiquement une configuration de faisceau pompe en incidence et faisceau sonde en incidence oblique sur l'échantillon ;
- la figure 12 représente un exemple de mesures de spectrométrie acoustique résonante.

La présente divulgation concerne une technique de spectrométrie acoustique résonante basée sur une technique optique de pompe-sonde, où la fréquence acoustique peut être balayée continument en variant la fréquence de répétition des impulsions du faisceau pompe de manière à déterminer la condition de Bragg pour la diffusion Brillouin du faisceau sonde. Le système se comporte alors comme un monochromateur acoustique. Cette technique de spectrométrie acoustique résolue en fréquence permet d'accroître l'efficacité de détection de la diffusion Brillouin.

Les limites liées à la technique d'acoustique picoseconde classique sont levées dans la présente divulgation grâce à une analyse fréquentielle qui met en œuvre un balayage de fréquence de répétition en combinaison avec une résolution en fréquence acoustique de quelques kHz pour une mesure précise de diffusion Brillouin à la résonance.

Dispositif

Afin d'expliquer le fonctionnement du système, on considère un échantillon 2 à analyser qui est déposé sur ou mis en contact avec un transducteur opto-acoustique 1. L'interface 3 entre le transducteur opto-acoustique 1 et l'échantillon 2 est de préférence plane.

Sur la figure 2, on a représenté un système de spectrométrie acoustique résonante selon un premier mode de réalisation de l'invention. Dans ce premier mode de réalisation, on utilise une seule et même source d'impulsions laser ultrabrèves pour former le faisceau pompe 14 et le faisceau sonde 15. Comme détaillé ci-dessous, le faisceau pompe 14 génère un réseau spatial périodique de phonons acoustiques cohérents dans l'échantillon. Le faisceau sonde 15 permet de générer un faisceau rétro-diffusé par interaction Brillouin du faisceau sonde 15 sur ce réseau périodique de phonons acoustiques cohérents.

Le système de la figure 2 comporte un dispositif de source lumineuse 4, un dispositif de variation de fréquence 5, un système de détection 6 et une unité 7 de contrôle et de traitement du signal. Dans l'exemple illustré sur la figure 2, le système comporte en outre une lame demi-onde 9, un cube séparateur de polarisation 8 et une lame quart d'onde 19. Le support est disposé de manière à ce que le rayonnement incident soit de préférence en incidence normale sur l'échantillon 2 et/ou sur l'interface 3 entre l'échantillon 2 et le transducteur opto-acoustique 1.

Le dispositif de source lumineuse 4 génère un train d'impulsions laser ultrabrèves à une fréquence de répétition F.

Dans le présent document on entend par train d'impulsions laser, ou, de manière équivalente, série d'impulsions laser, une série temporelle d'impulsions laser, dans laquelle chaque impulsion est émise à un instant séparé temporellement de 1/F de l'impulsion suivante et/ou précédente, où F représente la fréquence de répétition du train d'impulsions. De façon avantageuse, les impulsions laser d'un même train d'impulsions ont toutes les mêmes propriétés spectrales et temporelles.

En sortie du dispositif de source lumineuse 4, les impulsions laser sont par exemple polarisées linéairement. La lame 9 demi-onde est de préférence disposée à 45 degrés, d'une part, de l'axe de polarisation linéaire des impulsions source et, d'autre part, des axes du cube séparateur de polarisation 8. La lame 19 quart d'onde est traversée une fois à l'aller par les impulsions lumineuses incidentes du faisceau pompe 14 ou du faisceau sonde 15. La lame 19 quart d'onde est traversée une autre fois par un faisceau lumineux formé par réflexion et diffusion du faisceau sonde 15 sur l'échantillon 2. Au total, la lame 19 quart d'onde introduit donc un retard égal à celui d'une lame-demi onde. Par conséquent, au niveau du cube séparateur de polarisation 8, le faisceau lumineux de réflexion et/ou diffusion 120 est polarisé perpendiculairement par rapport au faisceau pompe 14 et au faisceau sonde 15. Ainsi, le cube séparateur de polarisation 8 permet de séparer le faisceau lumineux de réflexion et diffusion 120 pour le diriger vers le système de détection 6.

Le système de détection 6 détecte le faisceau lumineux de réflexion et diffusion 120 et forme un signal électronique 160. L'unité 7 commande le dispositif de variation de la fréquence de répétition 5 de manière à faire varier la fréquence de répétition F du train d'impulsions émis par le dispositif de source lumineuse 4. Le dispositif de source lumineuse 4 génère un faisceau pompe 14 constitué d'impulsions ayant une fréquence de répétition F située dans un domaine spectral de l'ordre du gigahertz. A titre d'exemple non limitatif, le domaine spectral de la fréquence de répétition est situé entre de 0,5 GHz et 40 GHz. De plus, le dispositif de variation de la fréquence de répétition 5 balaye la fréquence de répétition F dans une gamme de fréquence, ou gamme spectrale également située dans le domaine du gigahertz. Le balayage de fréquence F peut être continu ou par pas de quelques hertz à quelques kHz dans une gamme spectrale. L'unité 7 permet de traiter le signal de réflexion et diffusion détecté en fonction de la fréquence de répétition F des impulsions du faisceau pompe 14 pour en extraire une mesure de signal de diffusion Brillouin. Ce signal de diffusion Brillouin est résonant lorsque le pas P du réseau de phonons est égal à une demi-longueur d'onde du faisceau sonde 15.

Le dispositif de source lumineuse 4 de fréquence variable comprend de préférence une source de type peigne de fréquence optique ayant une fréquence de répétition F simplement accordable dans une gamme spectrale allant de 0,5 à 40 GHz et de préférence de 1 à 20 GHz, ou de 5 à 11 GHz.

Actuellement, il existe principalement deux techniques de génération de peigne de fréquence optique. Une technique connue repose sur l'utilisation d'une cavité laser dont le fonctionnement en mode impulsionnel est obtenu par blocage de mode. Une telle cavité laser permet de générer des impulsions laser de durée picoseconde à femtoseconde, avec une fréquence de répétition de l'ordre de 10 MHz à 1 GHz, définissant un peigne de fréquence optique dont l'intervalle spectral libre est déterminé par la longueur de la cavité. En changeant la longueur de la cavité, il est possible de faire varier la fréquence de répétition. Toutefois, le balayage de fréquence de répétition est alors limité à une gamme spectrale restreinte, du fait des instabilités de la cavité.

Dans la présente divulgation, on utilise de préférence une technique illustrée schématiquement sur la figure 3 pour générer le faisceau pompe 14. Ici, le dispositif de source lumineuse 4 comporte une source laser 40 continue mono-fréquence et des modulateurs électro-optiques 41, 42, 43, 44 pour générer un peigne de fréquence optique. Dans certains modes de réalisation, le même dispositif de source lumineuse 4 génère aussi le faisceau sonde 15.

La figure 3 représente schématiquement un exemple d'architecture proposée pour un dispositif de génération d'impulsions lumineuses de fréquence de répétition variable. Ce dispositif comporte une diode laser 40, des modulateurs optiques 41, 42, 43, 44, un système d'amplificateur optique 45 et un compresseur 46. On a aussi représenté schématiquement sur la figure 3, le spectre en longueur d'onde et la forme temporelle du rayonnement lumineux en sortie respectivement de la diode laser 40, des différents modulateurs optiques et du compresseur 46.

La diode laser 40 est de préférence une diode laser fibrée qui émet un rayonnement laser 140 temporellement continu. A titre d'exemple non limitatif, le rayonnement laser 140 est émis à une longueur d'onde de 1030 nm. En sortie de la diode laser 40 sont disposés en série trois modulateurs de phase 41, 42, 43. Les modulateurs de phase 41, 42, 43 sont pilotés par un même générateur micro-onde 50 à bas bruit. Plus précisément, le générateur micro-onde 50 module la tension de modulation 51, respectivement, 52, 53 de chaque modulateur de phase 41, respectivement, 42, 43. Le générateur micro-onde 50 a une fréquence de modulation F située dans le domaine spectral du gigahertz, par exemple de l'ordre de 0,5 à 20 GHz ou même 40 GHz.

Ainsi, le modulateur de phase 41 introduit un déphasage PHI1. En sortie du modulateur de phase 41, le rayonnement laser est continu temporellement et présente une pluralité de longueurs d'onde discrètes représentées sur le spectre 141. De manière analogue, chaque modulateur de phase 42, respectivement 43, introduit un déphasage supplémentaire PHI2, respectivement PHI3. Les trois tensions de modulation 51, 52, 53 sont soigneusement ajustées de manière à générer un rayonnement laser continu temporellement (voir les formes temporelles 241, respectivement 242, 243) et qui présente un peigne de longueurs d'onde discrètes, comme représenté sur le spectre 141, respectivement 142, 143. Un quatrième modulateur d'amplitude 44 est disposé en sortie des modulateurs de phase et complète le dispositif de modulation. Le générateur micro-onde 50 module la tension de modulation du modulateur d'amplitude 44. Le modulateur d'amplitude 44 module l'amplitude du rayonnement à la fréquence de modulation du générateur 50. Le rayonnement laser en sortie des modulateurs optiques 41 à 44 est ensuite amplifié par un système d'amplificateur optique 45 puis comprimé temporellement par un compresseur 46. De préférence, le système d'amplificateur optique 45 et/ou le compresseur 46 sont basés sur des composants à fibre optique. Le système d'amplificateur optique 45 comprend par exemple un ou plusieurs amplificateurs à fibre dopée Ytterbium disposés en série. Un compresseur 46 est disposé en sortie du système d'amplificateur optique 45. Le compresseur 46 permet de compenser les déphasages induits par les modulateurs 41 à 44 de manière à comprimer la durée des impulsions 14 émises jusqu'à une picoseconde ou même quelques centaines de femtosecondes. En sortie du dispositif de source 4, la forme temporelle 246 du rayonnement n'est plus continue mais modulée à la fréquence de répétition F.

De façon avantageuse, le générateur micro-onde 50 applique aux modulateurs de phase 41, 42, 43, et, respectivement, au modulateur d'amplitude 45, une modulation de phase et, respectivement, d'amplitude dans un domaine spectral de fréquences micro-ondes pouvant aller de 0,5 à 20 GHz. Le dispositif de source lumineuse 4 permet ainsi de produire un train d'impulsions ultra-brèves 246 ayant une fréquence de répétition F égale à la fréquence de modulation du générateur micro-onde située dans le domaine spectral du gigahertz.

De plus, la fréquence de répétition F est réglable en ajustant la fréquence du générateur micro-onde 50. La fréquence de répétition F est ainsi située dans le domaine spectral du gigahertz et ajustable dans une gamme spectrale pouvant aller par exemple de 5 GHz à 20 GHz. De cette manière, la fréquence de répétition des impulsions laser ultra-brèves 246 est aisément ajustable par modification de la fréquence du générateur micro-onde 50.

Le train d'impulsions ultra-brèves 246 présente spectralement un peigne de fréquence optique 146, autrement dit un peigne de longueurs d'onde discrètes, séparées par un intervalle spectral libre ou ISL déterminé par la fréquence de modulation du signal pilotant les modulateurs 41, 42, 43, 44. En effet, les modulations multiples produisent des raies latérales 141, 142, 143, autour de la fréquence optique 140 du laser continu. A titre d'exemple, le peigne de longueur d'onde s'étend spectralement sur environ 3 nm autour de la longueur d'onde de 1030 nm.

La technologie de source laser 40 à fibre dopée ytterbium, présentant une raie d'émission centrale à environ 1030 nm, est parfaitement adaptée à l'amplification efficace, au moyen d'un amplificateur optique 45, jusqu'à des niveaux de puissance moyenne très importants, par exemple supérieurs à 100 W. D'une part, une telle source laser à fibre optique permet d'ajuster facilement la fréquence de répétition F des impulsions 246. D'autre part, une telle source laser à fibre optique permet de générer une forte puissance laser.

On dispose ainsi d'un dispositif de source lumineuse générant un train d'impulsions lumineuses 246 à une fréquence de répétition très élevée et ajustable dans une gamme spectrale. Dans le domaine temporel, ces d'impulsions lumineuses 246 ultra-brèves ont une durée ultra-brève et une fréquence de répétition F ajustable de manière continue ou de manière discrète dans une gamme spectrale de l'ordre du gigahertz. Dans le domaine spectral, ces d'impulsions lumineuses 14 ultra-brèves forment un peigne de fréquences optiques discrètes, périodiques, séparées par un intervalle spectral libre ISL déterminé par la fréquence de répétition F.

Nous allons maintenant décrire l'utilisation de ce train d'impulsions ajustable en fréquence de répétition F pour une mesure de spectrométrie acoustique, appliqué à la mesure de diffusion Brillouin. Selon un premier mode de réalisation, le même dispositif source génère le faisceau pompe 14 et le faisceau sonde 15. Dans ce cas, le faisceau pompe 14 et le faisceau sonde 15 sont constitués d'impulsions ultrabrèves à la même fréquence de répétition F.

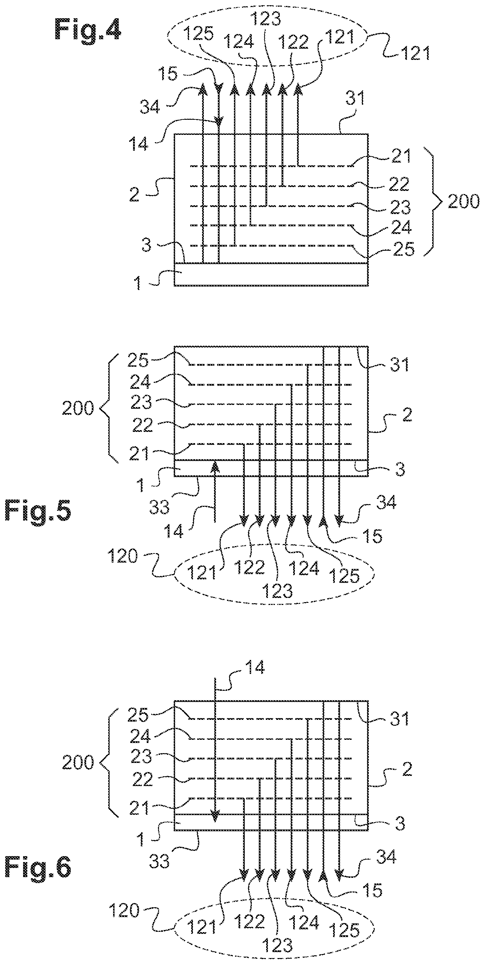

Sur la figure 4, on a représenté un échantillon 2 à analyser. L'échantillon présente une interface 3 avec un transducteur opto-acoustique 1. L'échantillon 2 est déposé ou fixé, par exemple par collage, sur le transducteur opto-acoustique 1.

Comme décrit en lien avec les figures 2 et 3, on génère un faisceau pompe 14 comprenant un train d'impulsions laser ultra-brèves, de période de répétition F variable dans le domaine spectral du gigahertz, et formant, dans le domaine spectral, un peigne de fréquence optique ayant un intervalle spectral libre ISL. Un système opto-mécanique, par exemple à miroirs ou à composants polarisants, dirige le faisceau pompe 14 vers l'interface 3, par exemple par transmission depuis la surface 31 à travers de l'échantillon 2. Dans l'exemple illustré sur la figure 4, le faisceau pompe 14 est incident sur la surface 31 de l'échantillon 2 et sur l'interface 3 avec un angle d'incidence normal.

Une première impulsion du faisceau pompe 14 est absorbée en partie par le transducteur opto-acoustique 1 et génère un premier front acoustique 21. De manière analogue, une deuxième, respectivement troisième, quatrième, cinquième impulsion du faisceau pompe 14 est absorbée en partie par le transducteur opto-acoustique 1 et génère un deuxième, respectivement troisième, quatrième, cinquième front d'onde acoustique 22, respectivement 23, 24, 25. Les fronts d'onde acoustique 21, respectivement 22, 23, 24, 25 se propagent de l'interface 3 dans l'échantillon 2 à une vitesse qui dépend de la célérité acoustique V des phonons dans cet échantillon 2. On rappelle que les impulsions lumineuses d'un même train d'impulsions sont séparées temporellement par un intervalle temporel égal à 1/F, où F est la période de répétition. Si l'échantillon 2 est homogène, les fronts d'onde acoustiques 21, 22, 23, 24, 25 sont séparés spatialement d'une période spatiale P qui dépend, d'une part, de la fréquence de répétition F des impulsions du faisceau pompe 14 et, d'autre part, de la célérité acoustique V des phonons dans l'échantillon 2. Le faisceau pompe 14 génère ainsi un réseau de phonons 200 spatialement périodique. Si le train d'impulsions du faisceau pompe 14 comporte un nombre suffisant d'impulsions, par exemple d'environ deux cents impulsions, le réseau de phonons 200 est entretenu et progressif dans l'échantillon 2.

Simultanément, une autre partie des impulsions incidentes, qui n'est pas absorbée par le transducteur opto-acoustique 1, est réfléchie par l'interface 3 vers l'échantillon 2 et forme un faisceau réfléchi 34. Le faisceau sonde 15 est ici constitué d'impulsions lumineuses ultrabrèves à la fréquence de répétition F. Le faisceau sonde 15 crée une pluralité de faisceaux 121, 122, 123, 124, 125 induits par interaction Brillouin sur le réseau de phonons 200. Les faisceaux 121, 122, 123, 124, 125 interfèrent et forment un faisceau de diffusion 120 par diffusion Brillouin sur le réseau de phonons 200. En direction inverse du faisceau sonde 15 incident, on collecte le faisceau de réflexion 34 et le faisceau de diffusion 120. Lorsque le chemin acoustique séparant deux fronts successifs est en accord avec la demi-longueur du faisceau sonde 15, les faisceaux 121, 122, 123, 124, 125 diffusés sont en phase et produisent des interférences constructives. Ainsi, les interférences se cumulent et le signal de diffusion Brillouin est amplifié dans la direction retour. On obtient ainsi un effet de diffusion Brillouin résonante.

Sans être lié par une théorie, nous détaillons ici une première analyse de ce phénomène physique de diffusion Brillouin résonante. Des phonons acoustiques cohérents sont générés lorsqu'une impulsion optique du faisceau pompe 14 est absorbée par le matériau transducteur opto-acoustique 1, qui est par exemple un matériau métallique. La superposition des phonons cohérents provoque un front de déformation 121 qui, au cours de sa propagation, perturbe localement l'indice optique du milieu.

Cette modulation de l'indice optique de l'échantillon permet de détecter, par interaction acousto-optique, certains des phonons engendrés. En effet, pour un échantillon faiblement absorbant, une interaction Brillouin peut être produite lorsque le nombre d'onde des phonons est double de celui du faisceau sonde 15. Cette condition est remplie lorsque la fréquence acoustique est égale à la fréquence de résonance Brillouin :

$$f_B = 2nV / \lambda$$

où n désigne l'indice optique de réfraction de l'échantillon, V la célérité acoustique et λ la longueur d'onde du faisceau sonde. Ainsi lorsque l'indice n est connu, la mesure de la fréquence de résonance Brillouin conduit aux propriétés mécaniques (V) de l'échantillon transparent.

Selon la présente divulgation, on utilise un faisceau sonde constitué d'un train d'impulsions optiques, de période de répétition 1/F ajustable en temps réel, pour exciter périodiquement des phonons acoustiques cohérents de manière à concentrer le spectre d'excitation acoustique sur la bande étroite de l'interaction Brillouin. Ainsi, lorsque la fréquence de répétition F des impulsions du faisceau pompe 14 est accordée à la fréquence acoustique de l'interaction Brillouin, pour une longueur d'onde optique donnée du faisceau sonde 15, un accroissement extraordinaire du signal diffusé est obtenu, qui permet de séparer, à la fréquence de résonance Brillouin, la portion du signal détecté correspondant à la réflexion (sur la surface 31 ou sur l'interface 3, ce signal de réflexion variant peu en fonction de la fréquence de répétition F) de la portion du signal détecté qui correspond à la diffusion Brillouin résonante sur le réseau de phonons acoustiques cohérents.

Une autre analyse du phénomène physique de diffusion Brillouin résonante est détaillée ci-dessous. On considère qu'une partie du faisceau sonde 15 est réfléchie sur un saut d'indice optique qui accompagne la propagation d'un front d'onde acoustique 121. Une autre partie du faisceau sonde 15 est réfléchie par un autre saut d'indice optique qui accompagne la propagation d'un autre front d'onde acoustique 122, respectivement 123, 124, 125. Au cours de la propagation du front d'onde acoustique 121, les faisceaux réfléchis produisent sur le photo-détecteur 6 des interférences dont la fréquence spectrale est liée à la célérité acoustique du front d'onde acoustique par la relation :

$$f_\mathrm{B} = 2nV / \lambda \qquad (I)$$

Ainsi, on génère, périodiquement en fonction du temps, des fronts d'onde acoustiques 121, 122, 123, 124, 125 qui se propagent dans le milieu 2. Lorsque le trajet acoustique séparant deux fronts d'onde acoustique successifs est accordé sur la longueur d'onde optique du faisceau lumineux d'interrogation dans le milieu, un accroissement extraordinaire du signal réfléchi est alors obtenu.

Formulé autrement, l'absorption d'un train d'impulsions du faisceau pompe 14 dans le milieu transducteur opto-acoustique 1 génère des fronts acoustiques périodiques 21, 22, 23, 24, 25 dans l'échantillon 2 transparent. Lorsque la fréquence de répétition F, de quelques gigahertz, des impulsions incidentes est accordée à la fréquence de l'interaction Brillouin $f_\mathrm{B}$, le faisceau sonde 15 est réfracté efficacement par diffusion Brillouin.

Le même train d'impulsions peut être utilisé pour générer le faisceau pompe 14 et le faisceau sonde 15, ce qui contribue à rendre le montage très simple, comme illustré sur la figure 2. Le faisceau pompe 14 crée l'excitation périodique des fronts d'onde et le faisceau sonde 15 permet de détecter des interférences entre les faisceaux diffusés sur ces fronts d'onde.

On souligne ici que les interférences ne sont pas résolues temporellement mais au contraire, spectralement, en fonction de la fréquence de répétition F variable du faisceau pompe 14. Le système de détection mis en œuvre selon la présente divulgation peut ainsi reposer sur une détection très simple et évite l'utilisation d'une détection synchrone.

Le système de spectrométrie acoustique de la présente divulgation offre de nombreux avantages. Premièrement, la possibilité d'ajuster facilement la fréquence de répétition F du peigne d'impulsions 14 permet d'accorder la génération des phonons acoustiques cohérents avec l'interaction Brillouin de l'échantillon à analyser. Deuxièmement, on dispose aujourd'hui de lasers de forte puissance qui rendent possible une détection résolue spatialement par caméra et donc une imagerie temps réel plein champ plutôt que point à point.

Dans une application non résolue spatialement, le système de détection 6 comporte un photodétecteur.

Dans un autre mode de réalisation particulier et avantageux, le système de détection 6 comporte une caméra, par exemple de type CCD, comprenant une matrice de pixels et un système optique formant une image d'une zone de l'échantillon sur la matrice de pixels. L'utilisation d'un système de source lumineuse basé sur un laser à fibre à 1030 nm de forte intensité permet de détecter un signal résultant de l'interaction Brillouin sur la matrice de pixels de la caméra. On obtient ainsi une image de spectrométrie acoustique en fonction de la fréquence de répétition des impulsions. Lorsque la génération de phonons cohérents est accordée à la fréquence de diffusion Brillouin, le signal détecté est fortement amplifié. Le balayage de la fréquence de répétition F permet ainsi de révéler des fréquences d'interaction Brillouin inhomogènes au sein d'un échantillon hétérogène tel qu'une cellule biologique. Cette application à l'imagerie plein champ en temps réel de l'interaction Brillouin stimulée de façon résonante permet une avancée extraordinaire pour la microscopie de propriétés mécaniques.

Par ailleurs, le système optique de la caméra conjugue l'image d'une zone de l'échantillon avec la matrice de détecteurs. De façon avantageuse, le système optique est configuré pour obtenir des images successives de plusieurs plans de l'échantillon afin de reconstruire une image en trois dimensions de la structure de l'échantillon. Par exemple, le système optique comprend un objectif de microscope en configuration confocale pour former une image d'un plan particulier dans un échantillon transparent, par exemple en micro-biologie.

Dans le premier mode de réalisation décrit ci-dessus, on utilise un seul laser pour la génération du réseau de phonons acoustiques cohérents et pour la détection de l'interaction Brillouin résonante.

Dans une variante, on utilise deux sources d'impulsions laser distinctes. Une première source génère le faisceau pompe 14 constitué d'impulsions à la fréquence de répétition F variable, pour générer le réseau périodique de phonons acoustiques cohérents dans l'échantillon. Une deuxième source génère le faisceau sonde 15 pour lire le signal de diffusion Brillouin sur ce réseau périodique de phonons. La deuxième source peut être une source continue temporellement ou une source d'impulsions lumineuses, générant des impulsions à une autre fréquence de répétition.

Dans un deuxième mode de réalisation, illustré sur la figure 5, le transducteur opto-acoustique 1 est constitué d'un film mince absorbant à la longueur d'onde du faisceau pompe 14 et transparent à la longueur d'onde du faisceau sonde 15, qui est ici différente de la longueur d'onde du faisceau pompe 14. Le transducteur opto-acoustique 1 présente une interface 3 avec l'échantillon 2 à analyser. Le faisceau pompe 14 est dirigé vers une surface 33 du transducteur opto-acoustique 1 de manière à être absorbé dans le transducteur opto-acoustique 1 avant d'atteindre l'interface 3. Le transducteur opto-acoustique 1 génère, par conversion opto-acoustique un réseau de phonons acoustiques cohérents dans l'échantillon 2. Ici, le réseau de phonons acoustiques cohérents se propage dans l'échantillon 2 dans le même sens que l'impulsion laser de pompe incidente. Le faisceau sonde 15 est dirigé vers la surface 33 du transducteur opto-acoustique 1 de manière à être transmis dans l'échantillon via l'interface 3. Le faisceau sonde 15 génère un faisceau de diffusion 120 par diffusion Brillouin sur le réseau de phonons. L'avantage de ce mode de réalisation est de protéger l'échantillon du faisceau pompe 14.

Dans un troisième mode de réalisation, illustré sur la figure 6, le transducteur opto-acoustique 1 est constitué d'un film mince absorbant à la longueur d'onde du faisceau pompe 14 et transparent à la longueur d'onde du faisceau sonde 15, qui est ici différente de la longueur d'onde du faisceau pompe 14. L'échantillon est ici transparent à la longueur d'onde de sonde 15 et à la longueur d'onde de pompe. Le transducteur opto-acoustique 1 présente une interface 3 avec l'échantillon 2 à analyser. Le faisceau pompe 14 est dirigé vers une surface 31 de l'échantillon de manière à être transmis vers l'interface 3 et absorbé dans le transducteur opto-acoustique 1. Le transducteur opto-acoustique 1 génère, par conversion opto-acoustique un réseau de phonons acoustiques cohérents dans l'échantillon 2. Ici, le réseau de phonons acoustiques cohérents se propage dans l'échantillon 2 en sens opposé du faisceau pompe incident. Le faisceau sonde 15 est dirigé vers une surface 33 du transducteur opto-acoustique 1 de manière à être transmis dans l'échantillon via l'interface 3. Le faisceau sonde 15 génère un faisceau de diffusion 120 par diffusion Brillouin sur le réseau de phonons.

Dans un quatrième mode de réalisation, illustré sur la figure 7, le transducteur opto-acoustique 1 est constitué d'un film mince absorbant à la longueur d'onde du faisceau pompe. L'échantillon est ici transparent à la longueur d'onde de sonde 15. Le transducteur opto-acoustique 1 présente une interface 3 avec l'échantillon 2 à analyser. Le faisceau pompe 14 est dirigé vers une surface 33 du transducteur opto-acoustique 1 de manière à être absorbé dans le transducteur opto-acoustique 1 avant d'atteindre l'interface 3. Le transducteur opto-acoustique 1 génère, par conversion opto-acoustique un réseau de phonons acoustiques cohérents dans l'échantillon 2. Ici, le réseau de phonons acoustiques cohérents se propage dans l'échantillon 2 dans le même sens que l'impulsion laser de pompe incidente. Le faisceau sonde 15 est dirigé vers une surface 31 de l'échantillon. Le faisceau sonde 15 génère un faisceau de diffusion 120 par diffusion Brillouin sur le réseau de phonons. L'avantage de ce mode de réalisation est aussi de protéger l'échantillon du faisceau pompe 14.

Dans les modes de réalisation décrits en lien avec les figures 2, 4 à 7 et 8, le faisceau pompe 14 qui génère le réseau de phonons est incidents sur le transducteur opto-acoustique ou sur l'interface avec un angle d'incidence normal et le faisceau sonde 15 qui forme des interférences sur ce réseau de phonon est incidents sur la surface 31 de l'échantillon 2 et sur l'interface 3 avec un angle d'incidence normal.

D'autres angles d'incidence sont ici considérés sans sortir du cadre de la présente divulgation.

Ainsi, sur la figure 9, le faisceau pompe 14 est incident sur l'échantillon 2 avec un angle d'incidence oblique et le faisceau sonde 15 est incident sur l'échantillon 2 avec un angle d'incidence normal. Sur la figure 10, le faisceau pompe 14 est incident sur l'échantillon 2 avec un angle d'incidence normal et le faisceau sonde 15 est incident sur l'échantillon 2 avec un angle d'incidence oblique. Sur la figure 11, le faisceau pompe 14 est incident sur l'échantillon 2 avec un angle d'incidence oblique et le faisceau sonde 15 est incident sur l'échantillon 2 avec un autre angle d'incidence oblique. On note A.I. l'angle d'incidence du faisceau sonde 15 sur l'échantillon. On mesure le faisceau diffusé 120 dans la direction formant un angle opposé -A.I. avec la normale à l'échantillon. L'homme du métier adaptera aisément ces différents angles d'incidence aux modes de réalisation décrits en lien avec les figures 4 à 7.

Le pas P du réseau de phonons varie suivant une fonction connue de l'angle d'incidence du faisceau d'excitation. De même, la fréquence de diffusion Brillouin et l'apparition d'interférence varie de manière connue en fonction de l'angle d'incidence du faisceau sonde sur l'échantillon.

Sur la figure 12 on a représenté un exemple de mesures de réflectivité de surface sur deux échantillons différents de silice en fonction de la fréquence de répétition F des impulsions laser, dans une gamme spectrale comprise entre 16,4 GHz et 17,1 GHz. Le transducteur opto-acoustique est ici un film métallique ayant une interface plane avec l'échantillon. La fréquence de répétition est ici modifiée de manière incrémentale par pas de 20 MHz. L'intensité du signal détecté est représentée sur la Fig. 12. L'augmentation significative du signal détecté révèle l'interaction Brillouin attendue pour la silice, à la longueur d'onde du faisceau sonde de 1030 nm, lorsque la fréquence de répétition des impulsions du faisceau pompe est d'environ 16,8 GHz. Cette fréquence de répétition est en accord avec les valeurs connues de l'indice optique et de la célérité acoustique de la silice.

Le système et le procédé objet de la présente divulgation permettent ainsi de mesurer les propriétés élastiques de milieux transparents, liquides ou solides, éventuellement de nature biologique. Ces mesures de propriétés mécaniques sont réalisées de manière non destructive et sans contact, ce qui représente un avantage notable. La réalisation d'un système de spectrométrie acoustique combinée avec un système d'imagerie en plein champ permet de cartographier la fréquence Brillouin d'un échantillon en quelques millisecondes et avec une résolution spatiale de l'ordre du micromètre.

Un système de traitement du signal permet de déduire de ces mesures de diffusion Brillouin différentes propriétés associées à différentes applications.

Les applications suivantes sont notamment envisagées.

La diffusion Brillouin permet de mesurer la célérité de l'onde acoustique diffusante, laquelle dépend de la compressibilité du milieu. La célérité acoustique ainsi que l'indice de réfraction optique n étant sensibles aux contraintes mécaniques résiduelles, le système et procédé objet de la présente divulgation peuvent ainsi permettre de détecter ces contraintes mécaniques.

Le transducteur opto-acoustique 1 génère des phonons acoustiques cohérents et les transmet en direction de l'échantillon à analyser. Or, l'amplitude des phonons acoustiques cohérents présents dans l'échantillon dépend du contact mécanique au niveau de l'interface entre le métal du transducteur opto-acoustique 1 et la couche mince transparente de l'échantillon à analyser. Les propriétés d'adhésion peuvent ainsi être caractérisées, notamment pour des assemblages dans le domaine de la microélectronique.

Ces analyses trouvent des applications dans différents domaines technologiques. En photonique, les mesures de diffusion Brillouin peuvent être analysées pour en déduire une mesure de l'élasticité et/ou l'imagerie de défauts d'adhérence entre une ou plusieurs couches minces transparentes, utilisées par exemple dans des systèmes ou composants optiques, par exemple en lunetterie. En électronique, les mesures de diffusion Brillouin peuvent être analysées pour en déduire une mesure d'élasticité de films minces transparents utilisés par exemple dans les téléphones mobiles, ou pour le contrôle d'adhérence de composants électroniques minces transparents. Dans l'industrie mécanique, on peut déduire des mesures Brillouin, une mesure de l'élasticité et de l'adhérence de couches minces durcissantes déposées sur les outils de coupe utilisés en usinage, notamment l'usinage grande vitesse (revêtements d'outils de coupe, par exemple en carbure). En biologie cellulaire, ou dans des applications de biologie médicale, des ondes acoustiques de fréquences très supérieures à celles employées en microscopie acoustique conventionnelle peuvent être engendrées optiquement et détectées par interaction Brillouin dans le milieu cellulaire. Notamment, il a été montré que les signaux relatifs au noyau et respectivement à la vacuole de cellules végétales sont sensiblement différents. L'application du système d'imagerie selon la présente divulgation permet de produire des cartographies de la compressibilité et de l'adhésion de cellules individuelles, ou d'une population de cellules issue par exemple de coupes histologiques. La compressibilité différente des cellules saines et tumorales peut permettre leur identification à des fins d'analyse biologique et/ou de diagnostic.

**Revendications**

1. Système de spectrométrie acoustique résonante pour l'analyse d'un échantillon (2), le système comprenant :

   - un moyen de transduction opto-acoustique (1) ayant une interface (3) en contact avec l'échantillon (2) à analyser,
   - un dispositif optique de pompe-sonde (4) adapté pour générer un faisceau pompe (14) et un faisceau sonde (15),
   - le faisceau pompe (14) étant constitué d'une série d'impulsions lumineuses de pompe ultrabrèves ayant une fréquence de répétition (F) située dans un domaine spectral compris entre plusieurs centaines de mégahertz et plusieurs dizaines de gigahertz, des moyens opto-mécaniques pour diriger le faisceau pompe (14) vers le moyen de transduction opto-acoustique (1) pour générer un réseau périodique de phonons (200) acoustiques cohérents dans l'échantillon (2), le réseau périodique de phonons (200) ayant un pas (P) déterminé en fonction d'un rapport (V/F) entre la fréquence de répétition (F) du faisceau pompe (14) et une célérité acoustique (V) des phonons (200) acoustiques cohérents dans l'échantillon (2);
   - d'autres moyens opto-mécaniques pour diriger le faisceau sonde (15) vers l'échantillon (2), de manière à former un faisceau de diffusion (120) du faisceau sonde (15) sur le réseau périodique de phonons (200) acoustiques cohérents,
   - un dispositif de variation de fréquence (5) adapté pour faire varier la fréquence de répétition (F) du faisceau pompe (14) dans une gamme spectrale dudit domaine spectral, de manière à faire varier le pas (P) du réseau de phonons (200) acoustiques cohérents dans l'échantillon (5), et
   - un système de photo-détection (6) configuré pour recevoir le faisceau de diffusion (120) et pour mesurer un signal de diffusion en fonction de la fréquence de répétition dans ladite gamme spectrale.

2. Système selon la revendication 1 dans lequel le dispositif optique de pompe-sonde (4) comprend un laser (40) configuré pour émettre un faisceau laser continu monochromatique (140), un générateur micro-onde de fréquence variable configuré pour générer un signal de commande à ladite fréquence de répétition et une pluralité de modulateurs électro-optiques (41, 42, 43, 44) configurés pour recevoir le signal de commande et moduler le faisceau laser continu monochromatique en amplitude et en phase à ladite fréquence de répétition et un compresseur (46) configuré pour recevoir le faisceau laser modulé en amplitude et en phase à ladite fréquence de répétition et pour générer le faisceau pompe (14), le faisceau pompe (14) ayant une distribution spectrale comprenant une pluralité de longueurs d'onde discrètes séparées par un intervalle spectral libre déterminé par la fréquence de répétition.

3. Système selon l'une des revendications 1 ou 2 dans lequel le faisceau sonde (15) est continu temporellement.

4. Système selon l'une des revendications 1 ou 2 dans lequel le faisceau sonde (15) est constitué d'une autre série d'impulsions lumineuses de sonde ultrabrèves.

**5.** Système selon l'une des revendications 1 à 4 dans lequel le faisceau pompe (14) ayant une longueur d'onde de pompe, le faisceau sonde (15) ayant une longueur d'onde de sonde, la longueur d'onde de sonde est différente de la longueur d'onde de pompe.

**6.** Système selon l'une des revendications 1 à 4 dans lequel le faisceau pompe (14) ayant une longueur d'onde de pompe, le faisceau sonde (15) ayant une longueur d'onde de sonde, la longueur d'onde de sonde est égale à la longueur d'onde de pompe.

**7.** Système selon l'une des revendications 4 à 6 dans lequel le faisceau sonde (15) est constitué d'une portion du faisceau pompe (14).

**8.** Système selon l'une des revendications 1 à 7 dans lequel le faisceau pompe (14) et le faisceau sonde (15) sont en incidence normale sur l'échantillon, ou dans lequel le faisceau pompe (14) est en incidence normale sur l'échantillon et le faisceau sonde (15) en incidence oblique sur l'échantillon, ou dans lequel le faisceau pompe (14) est en incidence oblique sur l'échantillon et le faisceau sonde (15) en incidence normale sur l'échantillon ou dans lequel le faisceau pompe(14) est en incidence oblique sur l'échantillon et le faisceau sonde (15) présente une autre incidence oblique sur l'échantillon.

**9.** Système selon l'une des revendications 1 à 8 dans lequel le faisceau sonde (15) est configuré pour éclairer une zone de l'échantillon (2) et dans lequel le système de photo-détection (6) comporte un détecteur d'image résolu en deux dimensions et un système optique configuré pour former une image de ladite zone de l'échantillon sur le détecteur d'image.

**10.** Procédé de spectrométrie acoustique résonante, le procédé comprenant les étapes suivantes :

- génération d'un faisceau pompe (14) constitué d'une série d'impulsions lumineuses de pompe ultrabrèves ayant une fréquence de répétition (F) située dans un domaine spectral compris entre plusieurs centaines de mégahertz et plusieurs dizaines de gigahertz,
- le faisceau pompe (14) étant incident sur un moyen de transduction opto-acoustique (1) ayant une interface (3) avec un échantillon (2) à analyser, de manière à générer un réseau périodique de phonons (200) acoustiques cohérents dans l'échantillon (2), le réseau périodique de phonons (200) ayant un pas (P) déterminé en fonction d'un rapport (V/F) entre la fréquence de répétition (F) du faisceau pompe (14) et une célérité acoustique (V) des phonons (200) acoustiques cohérents dans l'échantillon (2),

- génération d'un faisceau sonde (15), le faisceau sonde (15) étant dirigé vers l'échantillon (2) de manière à former un faisceau de diffusion (120) par diffusion du faisceau sonde (15) sur le réseau périodique de phonons (200) acoustiques cohérents,
- variation de la fréquence de répétition (F) du faisceau pompe (14) dans une gamme spectrale de manière à faire varier le pas (P) du réseau périodique de phonons (200) acoustiques cohérents dans l'échantillon (5),
- photo-détection du faisceau de diffusion (120) en fonction de la fréquence de répétition (F) dans ladite gamme spectrale, et
- mesure d'un signal de diffusion en fonction de la fréquence de répétition (F) dans ladite gamme spectrale.

**Patentansprüche**

**1.** System zur akustischen Resonanzspektrometrie zur Analyse einer Probe (2), wobei das System Folgendes beinhaltet:

- ein optoakustisches Wandlungsmittel (1), welches eine Schnittstelle (3) in Kontakt mit der zu analysierenden Probe (2) aufweist,
- eine optische Pumpe-Sonde-Vorrichtung (4), welche geeignet ist, einen Pumpstrahl (14) und einen Sondenstrahl (15) zu erzeugen,
- wobei der Pumpstrahl (14) aus einer Reihe von ultrakurzen Pumpen-Lichtimpulsen mit einer Wiederholungsfrequenz (F) gebildet wird, welche in einem Spektralbereich befindlich ist, welche zwischen mehreren Hundert Megahertz und mehreren Zehn Gigahertz liegt, aus optomechanischen Mitteln zum Richten des Pumpstrahls (14) in Richtung des optoakustischen Wandlungsmittels (1) zum Erzeugen eines periodischen Netzwerks von kohärenten akustischen Phononen (200) in der Probe (2), wobei das periodische Phononen-Netzwerk (200) eine Teilung (P) besitzt, welche angesichts eines Verhältnisses (V/F) zwischen der Wiederholungsfrequenz (F) des Pumpstrahls (14) und einer akustischen Geschwindigkeit (V) der kohärenten akustischen Phononen (200) in der Probe (2) bestimmt wird;
- weitere optomechanische Mittel zum Richten des Sondenstrahls (15) in Richtung der Probe (2), um so einen Streuungsstrahl (120) aus dem Sondenstrahl (15) auf dem periodischen Netzwerk von kohärenten akustischen Phononen (200) zu bilden,
- eine Vorrichtung zum Verändern der Frequenz (5), welche geeignet ist, die Wiederholungsfrequenz (F) des Pumpstrahls (14) in einem Spektralband des Spektralbereichs zu verändern, um so die Teilung (P) des Netzwerks von kohärenten akustischen Phononen (200) in der Probe (5) zu verändern, und

- ein Photodetektionssystem (6), welches konfiguriert ist, um den Streuungsstrahl (120) zu empfangen und um ein Streuungssignal angesichts der Wiederholungsfrequenz in dem Spektralband zu messen.

2. System nach Anspruch 1, bei welchem die optische Pumpe-Sonde-Vorrichtung (4) einen Laser (40) beinhaltet, welcher konfiguriert ist, um einen durchgängigen, monochromatischen Laserstrahl (140) auszusenden, einen Mikrowellengenerator mit variabler Frequenz, welcher konfiguriert ist, um ein Steuersignal bei der Wiederholungsfrequenz zu erzeugen, und eine Vielzahl von elektrooptischen Modulatoren (41, 42, 43, 44), welche konfiguriert sind, um das Steuersignal zu empfangen und den durchgängigen, monochromatischen Laserstrahl in Bezug auf Amplitude und Phase bei der Wiederholungsfrequenz zu modulieren, und einen Kompressor (46), welcher konfiguriert ist, um den in Bezug auf Amplitude und Phase bei der Wiederholungsfrequenz modulierten Laserstrahl zu empfangen und um den Pumpstrahl (14) zu erzeugen, wobei der Pumpstrahl (14) eine spektrale Verteilung aufweist, welche eine Vielzahl diskreter Wellenlängen beinhaltet, die durch einen freien spektralen Intervall, welcher durch die Wiederholungsfrequenz bestimmt wird, getrennt sind.

3. System nach einem der Ansprüche 1 oder 2, bei welchem der Sondenstrahl (15) zeitlich durchgängig ist.

4. System nach einem der Ansprüche 1 oder 2, bei welchem der Sondenstrahl (15) aus einer anderen Reihe von ultrakurzen Sonden-Lichtimpulsen gebildet ist.

5. System nach einem der Ansprüche 1 bis 4, bei welchem der Pumpstrahl (14) eine Pumpenwellenlänge besitzt, der Sondenstrahl (15) eine Sondenwellenlänge besitzt, wobei die Sondenwellenlänge sich von der Pumpenwellenlänge unterscheidet.

6. System nach einem der Ansprüche 1 bis 4, bei welchem der Pumpstrahl (14) eine Pumpenwellenlänge besitzt, der Sondenstrahl (15) eine Sondenwellenlänge besitzt, wobei die Sondenwellenlänge gleich der Pumpenwellenlänge ist.

7. System nach einem der Ansprüche 4 bis 6, bei welchem der Sondenstrahl (15) aus einem Abschnitt des Pumpstrahls (14) besteht.

8. System nach einem der Ansprüche 1 bis 7, bei welchem der Pumpstrahl (14) und der Sondenstrahl (15) einen Normaleinfall zur Probe aufweisen, oder bei welchem der Pumpstrahl (14) einen Normaleinfall zur Probe und der Sondenstrahl (15) einen schrägen Einfall zur Probe aufweist, oder wobei der Pumpstrahl (14) einen schrägen Einfall zur Probe und der Sondenstrahl (15) einen Normaleinfall zur Probe aufweist, oder wobei der Pumpstrahl (14) einen schrägen Einfall zur Probe aufweist, und der Sondenstrahl (15) einen anderen schrägen Einfall zur Probe aufweist.

9. System nach einem der Ansprüche 1 bis 8, bei welchem der Sondenstrahl (15) konfiguriert ist, um einen Bereich der Probe (2) zu beleuchten und bei welchem das Photodetektionssystem (6) einen in zwei Dimensionen aufgelösten Bilddetektor beinhaltet und ein optisches System, welches konfiguriert ist, um ein Bild von dem Bereich der Probe auf dem Bilddetektor zu bilden.

10. Verfahren zur akustischen Resonanzspektrometrie, wobei das Verfahren folgende Schritte beinhaltet:

- Erzeugen eines Pumpstrahls (14), welcher aus einer Reihe von ultrakurzen Pumpen-Lichtimpulsen mit einer Wiederholungsfrequenz (F) gebildet ist, welche sich in einem Spektralbereich befindet, welche zwischen mehreren Hundert Megahertz und mehreren Zehn Gigahertz liegt,
- wobei der Pumpstrahl (14) auf ein optoakustisches Wandlungsmittel (1) einfällt, welches eine Schnittstelle (3) mit einer zu analysierenden Probe (2) besitzt, um ein periodisches Netzwerk von kohärenten akustischen Phononen (200) in der Probe (2) zu erzeugen, wobei das periodische Netzwerk von Phononen (200) eine Teilung (P) aufweist, welche angesichts eines Verhältnisses (V/F) zwischen der Wiederholungsfrequenz (F) des Pumpstrahls (14) und einer akustischen Geschwindigkeit (V) der kohärenten akustischen Phononen (200) in der Probe (2) bestimmt wird,
- Erzeugen eines Sondenstrahls (15), wobei der Sondenstrahl (15) in Richtung der Probe (2) gerichtet ist, um so einen Streuungsstrahl (120) durch Streuung des Sondenstrahls (15) auf dem periodischen Netzwerk von kohärenten akustischen Phononen (200) zu bilden,
- Verändern der Wiederholungsfrequenz (F) des Pumpstrahls (14) in einem Spektralband, um so die Teilung (P) des periodischen Netzwerks von kohärenten akustischen Phononen (200) in der Probe (5) zu verändern,
- Photodetektion des Streuungsstrahls (120) angesichts der Wiederholungsfrequenz (F) in dem Spektralbereich, und
- Messen eines Streuungssignals angesichts der Wiederholungsfrequenz (F) in dem Spektralbereich.

**Claims**

1.  An acoustic resonance spectrometry system for analysing a sample (2), the system including:

    - an optoacoustic transduction means (1) having an interface (3) in contact with the sample (2) to be analysed,
    - an optical pump-probe device (4) adapted to generate a pump beam (14) and a probe beam (15),
    - the pump beam (14) consisting of a series of ultrashort pump light pulses having a repetition frequency (F) located in a spectral domain comprised between several hundreds of megahertz and several tens of gigahertz, optomechanical means for directing the pump beam (14) towards the optoacoustic transduction means (1) for generating a periodic grating of coherent acoustic phonons (200) in the sample (2), the periodic grating of phonons (200) having a pitch (P) determined as a function of a ratio (V/F) between the repetition frequency (F) of the pump beam (14) and an acoustic velocity (V) of the coherent acoustic phonons (200) in the sample (2);
    - other optomechanical means for directing the probe beam (15) towards the sample (2), so as to form a scattering beam (120) of the probe beam (15) on the periodic grating of coherent acoustic phonons (200),
    - a frequency variation device (5) adapted to vary the repetition frequency (F) of the pump beam (14) in a spectral range of said spectral domain, so as to vary the pitch (P) of the grating of coherent acoustic phonons (200) in the sample (5), and
    - a photo-detection system (6) configured to receive the scattering beam (120) and to measure a scattering signal as a function of the repetition frequency in said spectral range.

2.  System according to claim 1, wherein the optical pump-probe device (4) comprises a laser (40) configured to emit a monochromatic continuous laser beam (140), a variable frequency microwave generator configured to generate a control signal at said repetition frequency and a plurality of electro-optical modulators (41, 42, 43, 44) configured to receive the control signal and to modulate the monochromatic continuous laser beam in amplitude and in phase at said repetition frequency and a compressor (46) configured to receive the laser beam modulated in amplitude and in phase at said repetition frequency and to generate the pump beam (14), the pump beam (14) having a spectral distribution comprising a plurality of discrete wavelengths separated by a free spectral interval determined by the repetition frequency.

3.  System according to one of claims 1 or 2, wherein the probe beam (15) is temporally continuous.

4.  System according to one of claims 1 or 2, wherein the probe beam (15) consists of another series of ultra-short probe light pulses.

5.  System according to one of claims 1 to 4, wherein the pump beam (14) has a pump wavelength, the probe beam (15) has a probe wavelength, the probe wavelength being different from the pump wavelength.

6.  System according to one of claims 1 to 4, wherein the pump beam (14) has a pump wavelength, the probe beam (15) has a probe wavelength, the probe wavelength being equal to the pump wavelength.

7.  System according to one of claims 4 to 6, wherein the probe beam (15) consists of a portion of the pump beam (14).

8.  System according to one of claims 1 to 7, wherein the pump beam (14) and the probe beam (15) are in normal incidence on the sample, or wherein the pump beam (14) is in normal incidence on the sample and the probe beam (15) in oblique incidence on the sample, or wherein the pump beam (14) is in oblique incidence on the sample and the probe beam (15) is in normal incidence on the sample, or wherein the pump beam (14) is in oblique incidence on the sample and the probe beam (15) has another oblique incidence on the sample.

9.  System according to one of claims 1 to 8, wherein the probe beam (15) is configured to illuminate an area of the sample (2) and wherein the photo-detection system (6) includes a two dimensionally-resolved image detector and an optical system configured to form an image of said sample area on the image detector.

10. An acoustic resonance spectrometry method, the method comprising the following steps:

    - generating a pump beam (14) consisting of a series of ultra-short pump light pulses having a repetition frequency (F) located in a spectral domain comprised between several hundreds of megahertz and several tens of gigahertz,
    - the pump beam (14) being incident on an optoacoustic transduction means (1) having an interface (3) with a sample (2) to be analysed, so as to generate a periodic grating of coherent acoustic phonons (200) in the sample (2), the periodic grating of phonons (200) having a pitch (P) determined as a function of a ratio (V/F) between the repetition frequency (F) of the pump beam (14) and an acoustic velocity (V) of the coherent acoustic phonons (200) in the sample (2),

- generating a probe beam (15), the probe beam (15) being directed towards the sample (2) so as to form a scattering beam (120) by scattering the probe beam (15) on the periodic grating of coherent acoustic phonons (200),

- varying the repetition frequency (F) of the pump beam (14) in a spectral range so as to vary the pitch (P) of the periodic grating of coherent acoustic phonons (200) in the sample (5),

- photo-detecting the scattering beam (120) as a function of the repetition frequency (F) in said spectral range, and

- measuring a scattering signal as a function of the repetition frequency (F) in said spectral range.

Fig.1

Fig.2

Fig.3

Fig.4

Fig.5

Fig.6

**Fig.7**

**Fig.8**

**Fig.9**

**Fig.10**

**Fig.11**

**Fig.12**

R(u.a.)

F (GHz)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. A. STASHKEVICH ; P. DJEMIA ; Y. K. FETISOV ; N. BIZIÈRE ; C. FERMON.** High-Intensity Brillouin light scattering by spin waves in a permalloy film under microwave resonance pumping. *J. Appl. Phys.,* 2007, vol. 102, 103905
- **G. SCARCELLI ; S. H. YUN.** Confocal Brillouin microscopy for three-dimensional mechanical imaging. *Nat. Photonics,* 2008, vol. 2, 39-43
- **H. J. MARIS.** Picosecond ultrasonics. *Sci. Am.,* 1998, vol. 278, 64-67
- **FERNANDO PÉREZ-COTA et al.** Thin-film optoacoustic transducers for subcellular Brillouin oscillation imaging of individual biological cells. *APPLIED OPTICS,* 28 Septembre 2015, vol. 54 (28), 8388
- **H. N. LIN ; R. J. STONER ; H. J. MARIS ; J. TAUC.** Phonon attenuation and velocity measurement in transparent materials by picosecond acoustic interferometry. *J. Appl. Phys.,* 1991, vol. 69, 3816
- **T. DEHOUX ; M. ABI GHANEM ; O. F. ZOUANI ; J.-M. RAMPNOUX ; Y. GUILLET S. DILHAIRE ; M.-C. DURRIEU ; B. AUDOIN.** All-optical broadband ultrasonography of single cells. *Scientific Reports,* 2015, vol. 5, 8650